# FASCICULE DE BREVET EUROPEEN

(11) **EP 3 999 423 B1**
(45) Date de publication et mention de la délivrance du brevet: **30.08.2023**
(21) Numéro de dépôt: 20751617.0
(22) Date de dépôt: 16.07.2020
(51) Int. Cl.: B64F 5/50, F01D 25/28

(54) **OUTILLAGE ET PROCÉDÉ DE DÉMONTAGE ET DE DÉPLACEMENT D'UN CARTER DE TURBINE DU TYPE TRV D'UNE TURBOMACHINE D'AÉRONEF**
WERKZEUG UND VERFAHREN ZUM ZERLEGEN UND BEWEGEN EINES TRV-TYP TURBINENGEHÄUSE VON EINER FLUGZEUGTURBOMASCHINE
TOOL AND METHOD OF DISMOUNTING AND MOVING A TRV TYPE TURBINE CASING FROM AN AIRCRAFT TURBOMACHINE

(30) Priorité: 17.07.2019 FR 1908063
(43) Date de publication de la demande: 25.05.2022
(73) Titulaire: SAFRAN AIRCRAFT ENGINES, 75015 Paris (FR)
(72) Inventeur: CISTAC, Sébastien, Georges, 77550 MOISSY-CRAMAYEL (FR); CAUDRON, Olivier, Jean, 77550 MOISSY-CRAMAYEL (FR)
(74) Mandataire: Gevers & Orès
(86) Numéro de dépôt international: PCT/FR2020/051275
(87) Numéro de publication internationale: WO 2021/009464

(56) Documents cités:
- FR-A1- 3 051 833
- US-A1- 2015 113 787
- US-A1- 2017 297 744

## Description

### Domaine technique de l'invention

La présente invention concerne un outillage et un procédé de démontage et de déplacement d'un carter de turbine du type TRV d'une turbomachine d'aéronef.

### Arrière-plan technique

L'état de la technique comprend notamment les documents US-A1-2015/113787, FR-A1-3051833 et US-A1-2017/297744.

Une turbomachine comprend en général, d'amont en aval, dans le sens d'écoulement des flux dans la turbomachine, une soufflante et un générateur de gaz comportant un ou plusieurs compresseurs, une chambre de combustion et une ou plusieurs turbines. Dans une turbomachine à double flux, le flux d'air qui traverse la soufflante est divisé en deux parties dont une, appelé flux primaire, pénètre dans le générateur de gaz et est comprimé dans le ou les compresseurs, mélangé à du carburant et brûlé dans la chambre de combustion pour former des gaz de combustion qui sont ensuite détendus dans la ou les turbines. La détente des gaz de combustion dans les turbines permet d'entraîner leurs rotors qui entraînent à leur tour les rotors des compresseurs et de la soufflante. Une autre partie du flux d'air, appelé flux secondaire, s'écoule autour du générateur de gaz et est mélangé aux gaz de combustion sortant des turbines.

A l'extrémité aval du générateur de gaz, la turbomachine comprend un carter de turbine du type TRV qui est l'acronyme de l'expression anglo-saxonne *Turbine Rear Vane.* Un carter de turbomachine est en général une pièce annulaire qui s'étend autour de l'axe longitudinal de la turbomachine qui est confondu avec les axes de rotation de ses rotors. Un carter de turbine du type TRV est monté en aval des turbines et comprend deux viroles annulaires, respectivement interne et externe, s'étendant l'une à l'intérieur de l'autre et autour d'un même axe et reliées ensemble par des bras.

Les viroles du carter de turbine définissent entre elles une veine annulaire d'écoulement des gaz de combustion sortant des turbines. Les bras assurent la liaison des viroles entre elles et sont agencés autour de l'axe du carter. Certains bras peuvent être tubulaires pour alléger le carter et autoriser le passage de servitudes, telles que des câbles ou des conduites, à travers la veine de façon à ne pas perturber l'écoulement des gaz de combustion.

Les viroles ont en général une forme cylindrique ou tronconique et comprennent à chacune de leurs extrémités axiales une bride annulaire de fixation. Une bride annulaire comprend en général un rebord annulaire orienté perpendiculairement à son axe de révolution et comportant une rangée annulaire d'orifices de passage de vis de fixation de cette bride à une autre bride. Les brides du carter de turbine peuvent être circulaires ou festonnées. La bride amont de la virole externe du carter de turbine est fixée à une bride aval d'un carter de turbine, par exemple basse pression, de la turbomachine. La bride aval de cette virole externe est fixée à une bride amont d'une tuyère de la turbomachine.

La bride amont de la virole interne du carter de turbine est fixée à une bride aval d'un capotage de la turbomachine. La bride aval de cette virole interne est fixée à une bride amont d'un cône d'éjection de la turbomachine.

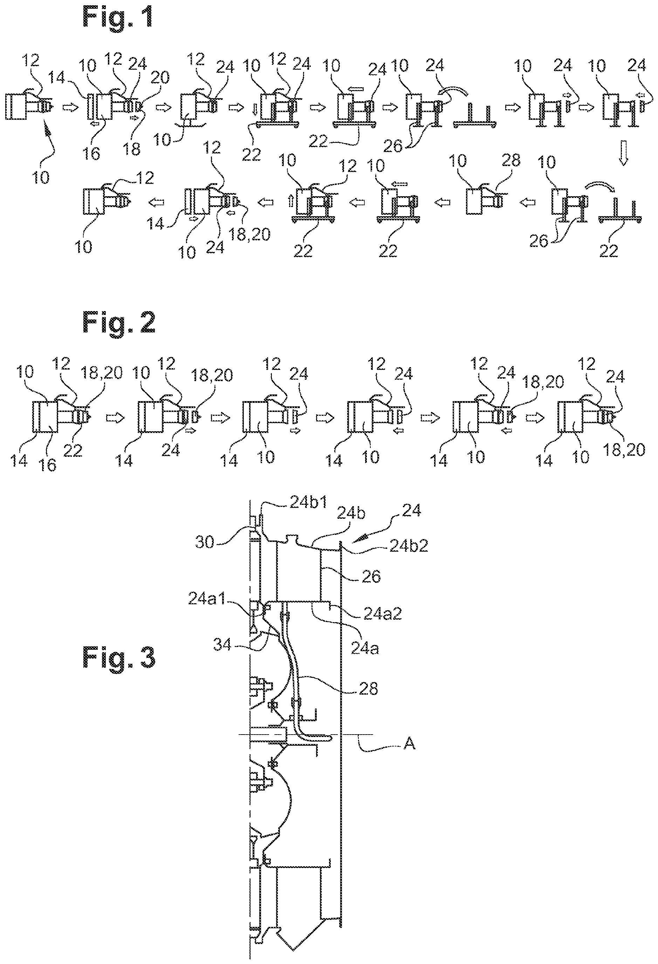

La figure 1 représente de manière très schématique des étapes de démontage d'un carter de turbine d'une turbomachine, lorsque cette dernière est montée sous une voilure d'un aéronef.

La turbomachine 10 est fixée à la voilure 12. Sa manche d'entrée d'air 14 située en amont de la soufflante 16, la tuyère 18 et le cône d'éjection 20 situés en aval du carter de turbine 24 sont retirés. La turbomachine 10 est démontée de la voilure 12 et est transportée par un chariot 22 jusqu'à une station d'accueil 26 où le carter de turbine 24 est retiré. Après maintenance, le carter de turbine 24 est remonté puis la turbomachine 10 est déplacée au moyen du chariot 22 jusqu'à un banc de test 28. Après validation, la turbomachine 10 est démontée du banc de test 28 et déplacée au moyen du chariot 22 jusqu'à l'aéronef pour être fixée à sa voilure 12. La manche d'entrée d'air 14, la tuyère 18 et le cône d'éjection 20 sont remontés sur la turbomachine 10.

On comprend que ces opérations sont longues et complexes à réaliser. Il existe donc un besoin de simplifier le démontage et la maintenance du carter de turbine en autorisant ces étapes directement sous la voilure de l'aéronef.

### Résumé de l'invention

La présente invention concerne un outillage de démontage et de déplacement d'un carter de turbine du type TRV d'une turbomachine d'aéronef, ce carter de turbine comportant deux viroles annulaires, respectivement interne et externe, s'étendant l'une à l'intérieur de l'autre et autour d'un même axe et reliées ensemble par des bras, caractérisé en ce que l'outillage comporte :
- un chariot inférieur de déplacement de l'outillage, et
- une platine supérieure de fixation au carter de turbine, cette platine étant portée par le chariot et comportant des premiers organes configurés pour coopérer avec une première bride annulaire d'une des viroles afin de supporter le carter et l'immobiliser axialement par rapport à l'outillage, et des deuxièmes organes configurés pour coopérer avec une seconde bride annulaire de l'autre des viroles afin guider et/ou de bloquer en rotation le carter autour dudit axe. L'outillage est ainsi adapté pour être fixé au carter de turbine afin de pouvoir l'immobiliser et le porter. L'outillage est en outre équipé d'un chariot de déplacement qui évite le transfert du carter d'un outillage à un autre. C'est ainsi le même outillage qui permet le démontage et le déplacement du carter de turbine, ainsi que son remontage.

Selon l'invention, les premiers organes comprennent des crochets qui sont chacun reliés à une molette et déplaçable grâce à la molette depuis une première position de déverrouillage jusqu'à une seconde position de verrouillage et d'immobilisation du carter.

L'outillage selon l'invention peut comprendre une ou plusieurs des caractéristiques suivantes, prises isolément les unes des autres ou en combinaison les unes avec les autres :
- les premiers organes peuvent coopérer avec la virole interne, ou en variante la virole externe,
- les seconds organes peuvent coopérer avec la virole externe, ou en variante la virole interne,
- les premiers organes sont portés par un secteur de couronne de la platine supérieure, ce secteur de couronne étant configuré pour être appliqué axialement sur la première bride, ou en variante sur une bride de l'autre des viroles ;
- chaque crochet a une forme générale en L et comprend une première branche sensiblement parallèle audit axe et configurée pour être engagée radialement à l'intérieur de la première bride (ou en variante sur la bride de l'autre des viroles), et une seconde branche déplaçable depuis la première position, dans laquelle elle s'étend sensiblement tangentiellement ou radialement vers l'intérieur par rapport audit axe, jusqu'à la seconde position, dans laquelle elle s'étend radialement vers l'extérieur pour maintenir serrée axialement cette bride ;
- les deuxièmes organes comprennent des tiges sensiblement parallèles audit axe et configurées pour être engagées dans des orifices de passage de boulons de la seconde bride ;
- l'outillage comprend deux tiges écartées l'une de l'autre d'un angle prédéterminé, de préférence compris entre 90° et 180°, et par exemple d'environ 90°, par rapport audit axe ; cet écartement permet de conférer aux tiges une fonction de centrage ;
- la platine comprend une partie inférieure fixe reliée au chariot, et une partie supérieure qui est mobile par rapport à la partie fixe et qui comprend au moins une partie desdits premiers et deuxièmes organes ;
- la partie mobile est configurée pour être déplacée en translation axiale dans une direction parallèle audit axe ;
- la partie supérieure de la platine comprend deux branches latérales orientées dans des directions opposées et dont les extrémités opposées sont reliées entre elles par le secteur de couronne ;
- le chariot est muni de roues en vue du déplacement de l'outillage sur un sol ;
- le chariot comprend des éléments de réglage d'une hauteur de la platine et d'au moins un angle de pivotement de la platine autour d'un axe.

La présente invention concerne encore un procédé de démontage et de déplacement d'un carter de turbine du type TRV d'une turbomachine d'aéronef, en particulier lorsque la turbomachine et le carter sont situés sous une voilure d'un aéronef, ce procédé utilisant un outillage tel que décrit ci-dessus et comprenant les étapes de :
- alignement de la platine de l'outillage avec le carter de turbine, l'outillage étant situé du côté d'une extrémité aval du carter,
- déplacement de l'outillage vers le carter, jusqu'à ce que les deuxièmes organes coopèrent avec la seconde bride de la virole externe, afin de bloquer et/ou de guider en rotation le carter autour de son axe vis-à-vis de l'outillage,
- immobilisation axiale du carter sur la platine au moyen des premiers organes de l'outillage, et
- démontage du carter et retrait du carter par déplacement de l'outillage supportant le carter.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig. 1] la figure 1 illustre de manière très schématique des étapes d'un procédé de démontage d'un carter de turbine d'une turbomachine d'aéronef, selon la technique antérieure,
[Fig. 2] la figure 2 illustre de manière très schématique des étapes d'un procédé de démontage d'un carter de turbine d'une turbomachine d'aéronef, qui peuvent être mises en œuvre avec la présente invention,
[Fig. 3] la figure 3 est une vue schématique en coupe axiale de l'extrémité aval d'une turbomachine d'aéronef, et montre un carter de turbine du type TRV, [Fig. 4] la figure 4 est une vue schématique en perspective de l'extrémité aval d'une turbomachine d'aéronef, et montre une étape d'un procédé de démontage selon l'invention,
[Fig. 5] la figure 5 est une vue schématique en perspective de l'extrémité aval de la turbomachine de la figure 4, et montre une autre étape d'un procédé de démontage selon l'invention,
[Fig. 6] la figure 6 est une autre vue schématique en perspective de l'extrémité aval de la turbomachine de la figure 5,
[Fig. 7] la figure 7 est une autre vue schématique en perspective de l'extrémité aval de la turbomachine de la figure 5,
[Fig. 8] la figure 8 est une vue schématique en perspective de l'extrémité aval de la turbomachine de la figure 4, et montre une autre étape d'un procédé de démontage selon l'invention,
[Fig. 9] la figure 9 est une vue schématique en perspective de l'extrémité aval de la turbomachine de la figure 4, et montre une autre étape d'un procédé de démontage selon l'invention,
[Fig. 10] la figure 10 est une autre vue schématique en perspective de l'extrémité aval de la turbomachine de la figure 4, et montre l'étape de la figure 9,
[Fig. 11] la figure 11 est une vue schématique en perspective de l'extrémité aval de la turbomachine de la figure 4, et montre une autre étape d'un procédé de démontage selon l'invention,

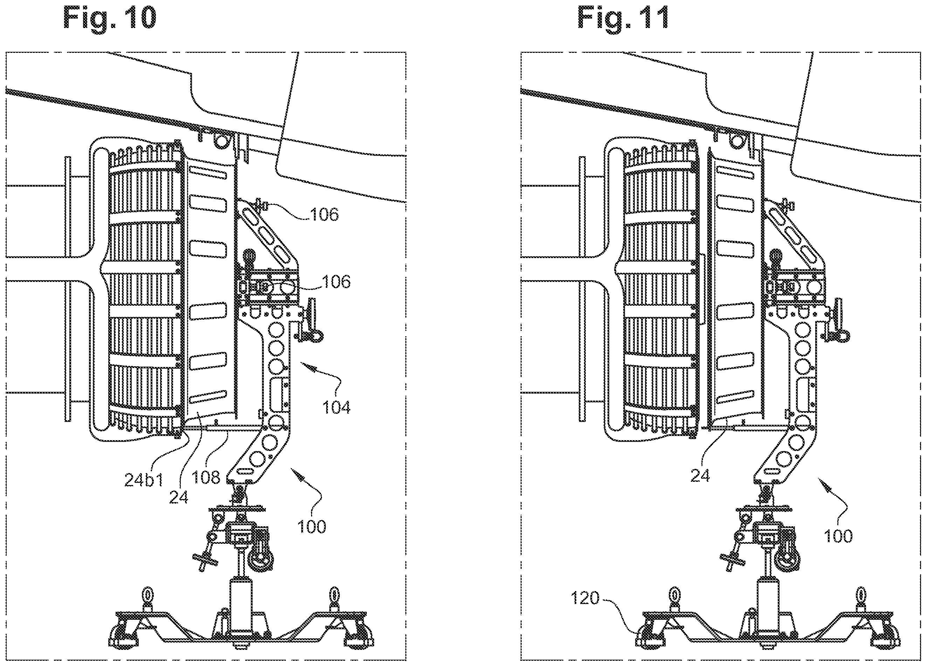

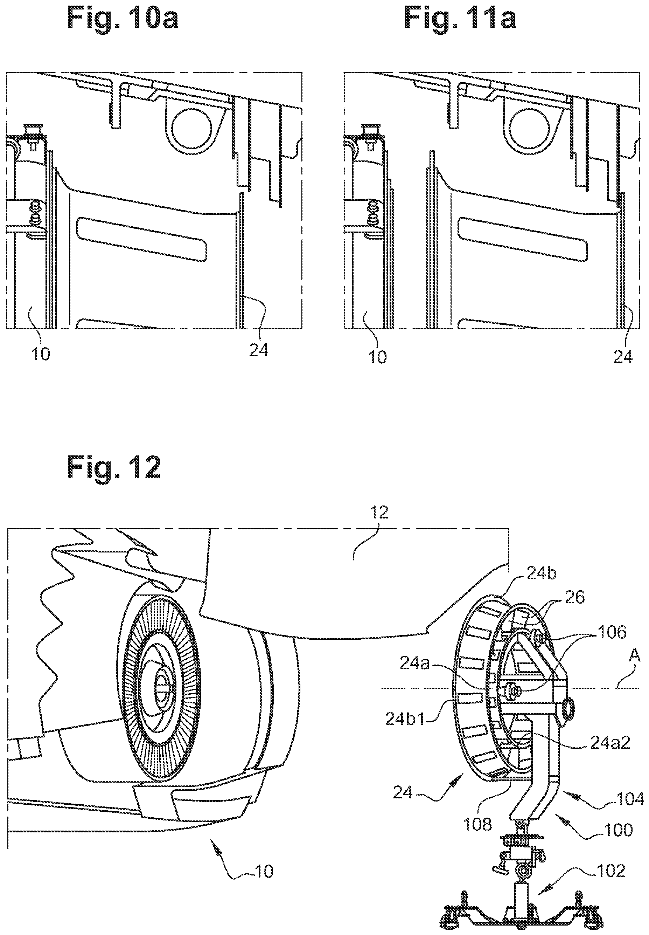

[Fig. 10a] la figure 10a est une vue agrandie d'un détail de la figure 10,
[Fig. 11 a] la figure 11 a est une vue agrandie d'un détail de la figure 11,

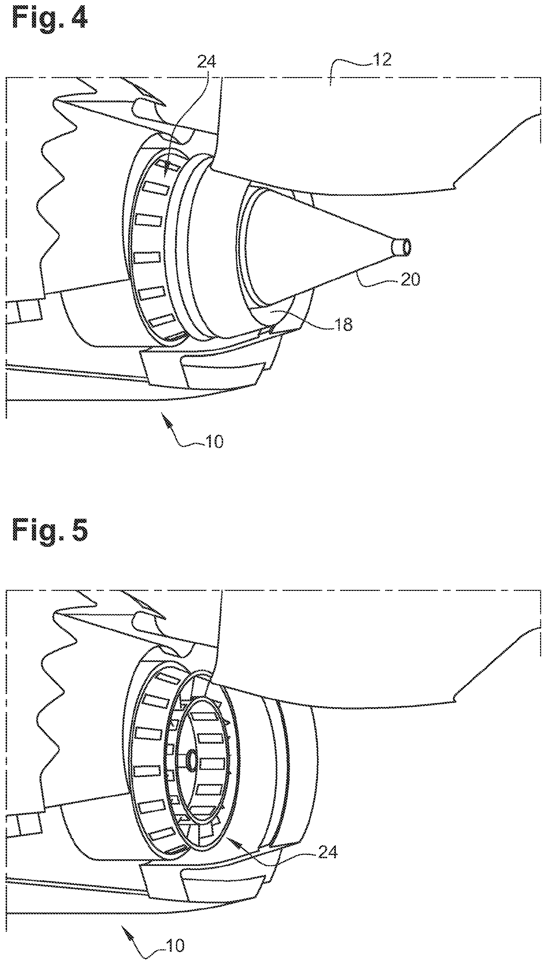

[Fig. 12] la figure 12 est une vue schématique en perspective de l'extrémité aval de la turbomachine de la figure 4, et montre une autre étape d'un procédé de démontage selon l'invention,

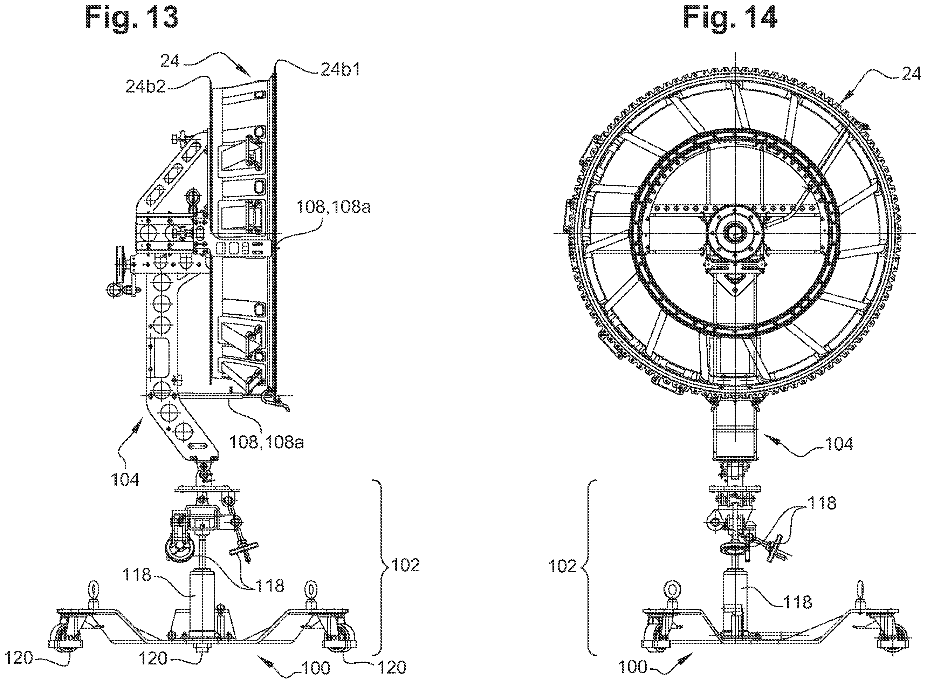

[Fig. 13] la figure 13 est une vue schématique en perspective et de côté d'un outillage selon un mode de réalisation de l'invention,
[Fig. 14] la figure 14 est une vue schématique en perspective et de face de l'outillage de la figure 13,

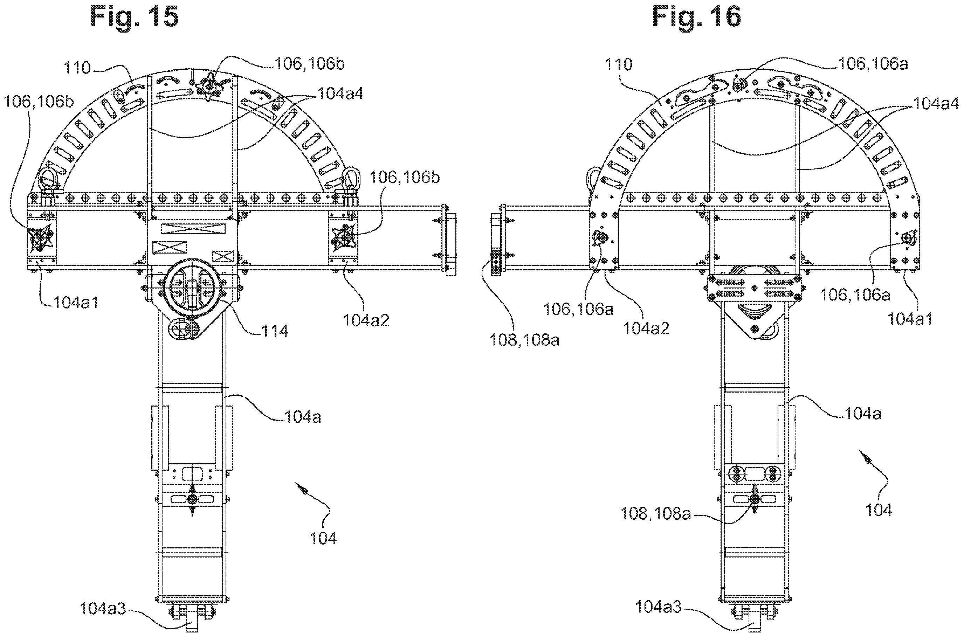

[Fig. 15] la figure 15 est une vue schématique en perspective et de face (arrière) d'une platine de l'outillage de la figure 13,
[Fig. 16] la figure 16 est une vue schématique en perspective et de face (avant) d'une platine de l'outillage de la figure 13,

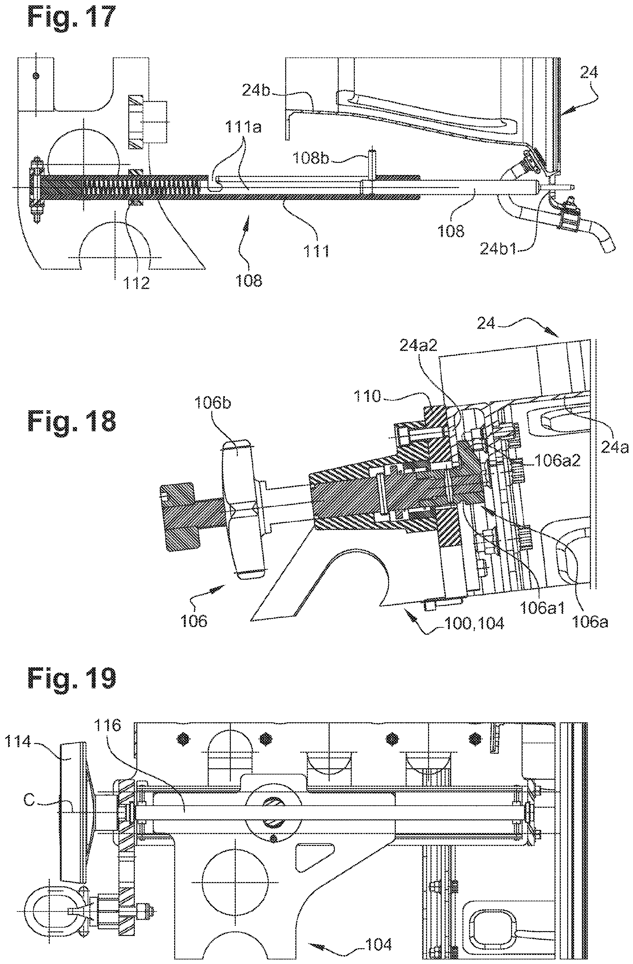

[Fig. 17] la figure 17 est une vue schématique en coupe partielle et à plus grande échelle d'un détail de l'outillage de la figure 13,
[Fig. 18] la figure 18 est une vue schématique en coupe partielle et à plus grande échelle d'un détail de l'outillage de la figure 13, et
[Fig. 19] la figure 19 est une vue schématique en coupe partielle et à plus grande échelle d'un détail de l'outillage de la figure 13.

### Description détaillée de l'invention

Comme évoqué dans ce qui précède, il existe un besoin de simplifier le démontage et la maintenance d'un carter de turbine en autorisant son démontage directement sous la voilure 12 d'un aéronef. Ceci est schématiquement représenté à la figure 2 dans laquelle les références utilisées sont les mêmes que celles utilisées en référence à la figure 1.

La figure 3 représente de manière schématique un carter de turbine 24 du type TRV. Ce carter 24 comporte deux viroles annulaires, respectivement interne 24a et externe 24b, s'étendant l'une à l'intérieur de l'autre et autour d'un même axe A qui est l'axe longitudinal de la turbomachine 10 et de ses rotors. Les deux viroles 24a, 24b sont reliées ensemble par des bras 26 sensiblement radiaux dont au moins certains peuvent être tubulaires pour alléger le carter et autoriser le passage de servitudes 28, telles que des câbles ou des conduites. Les viroles 24a, 24b définissent entre elles une veine annulaire d'écoulement des gaz de combustion sortant des turbines de la turbomachine situées juste en amont. Cette veine est traversée par les bras 26.

Les viroles 24a, 24b ont une forme cylindrique ou tronconique et comprennent à chacune de leurs extrémités axiales une bride annulaire de fixation, qui peut être circulaire ou festonnée.

La bride amont 24b1 de la virole externe 24b est fixée à une bride aval d'un carter de turbine 30, par exemple basse pression, de la turbomachine. La bride aval 24b2 de cette virole externe 24b est fixée à une bride amont de la tuyère 18 (figure 3). La bride amont 24a1 de la virole interne 24a est fixée à une bride aval d'un capotage 34 de la turbomachine. Ce capotage 34 peut être intégré de façon complètement solidaire ou non au carter 24. La bride aval 24a2 de la virole interne 24a est fixée à une bride amont du cône d'éjection 20 (figure 3).

Les figures 4 à 12 représentent des étapes d'un procédé de démontage du carter de turbine 24, et les figures 13 et suivantes montrent un mode de réalisation d'un outillage 100 de mise en oeuvre de ce procédé.

Une première étape illustrée à la figure 4 ainsi qu'au deuxième dessin de la figure 2 (en partant de la gauche) consiste à démonter la tuyère 18 et le cône d'éjection 20 de la turbomachine 10. La turbomachine 10 est fixée à la voilure 12 de l'aéronef et ces deux éléments sont retirés depuis l'aval de la turbomachine 10. Pour cela et de façon connue, les vis ou boulons de fixation de ces éléments sont dévissés et retirés, ce qui permet de les désolidariser de la turbomachine et de les retirer. Plus précisément, les vis de fixation de la bride de la tuyère 18 à la bride 24b2 de la virole 24b sont retirées afin d'extraire la tuyère 18 par translation axiale vers l'aval, puis les vis de fixation de la bride du cône 20 à la bride 24a2 de la virole 24a sont retirées afin d'extraire le cône 20 par translation axiale vers l'aval.

Ceci permet de dégager l'aval du carter de turbine 24, comme représenté aux figures 5 à 7. Ces figures permettent de voir des détails du carter de turbine 24 et de la turbomachine. Dans l'exemple représenté, la bride 24b2 s'étend radialement vers l'extérieur et est festonnée. La bride 24a2 s'étend radialement vers l'intérieur et est également festonnée. La bride 24b1 est similaire à la bride 24b2, et la bride 24a1 est quant à elle circulaire dans l'exemple représenté. Chaque bride comprend des parties pleines alternées avec des parties creuses, les parties pleines comportant des orifices de passage des vis de fixation des brides.

Ces figures permettent également de constater que les vis de fixation des brides 24a1, 24b1 sont accessibles depuis l'aval et peuvent donc être dévissées pour désolidariser le carter de turbine 24 du reste de la turbomachine. La bride 24b1 s'étend radialement vers l'extérieur et ses vis sont accessibles depuis l'extérieur de la virole 24b, et la bride 24a1 s'étend radialement vers l'intérieur et ses vis sont accessibles depuis l'intérieur de la virole 24a.

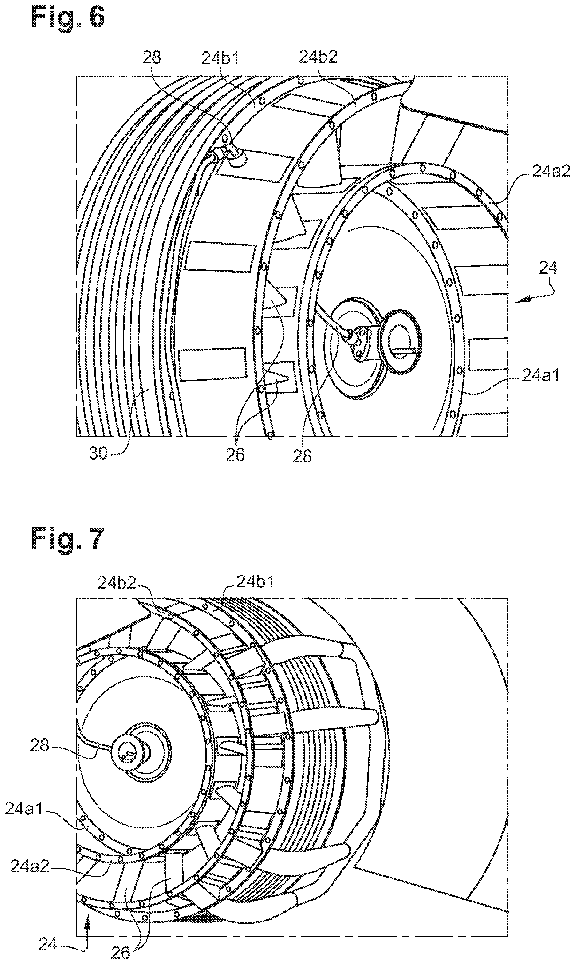

Les servitudes 28 qui traversent les bras 26 sont accessibles par l'intérieur et l'extérieur du carter de turbine 24 (figure 6) et leurs extrémités peuvent être désolidarisées d'autres éléments pour autoriser leur retrait et le démontage du carter de turbine 24.

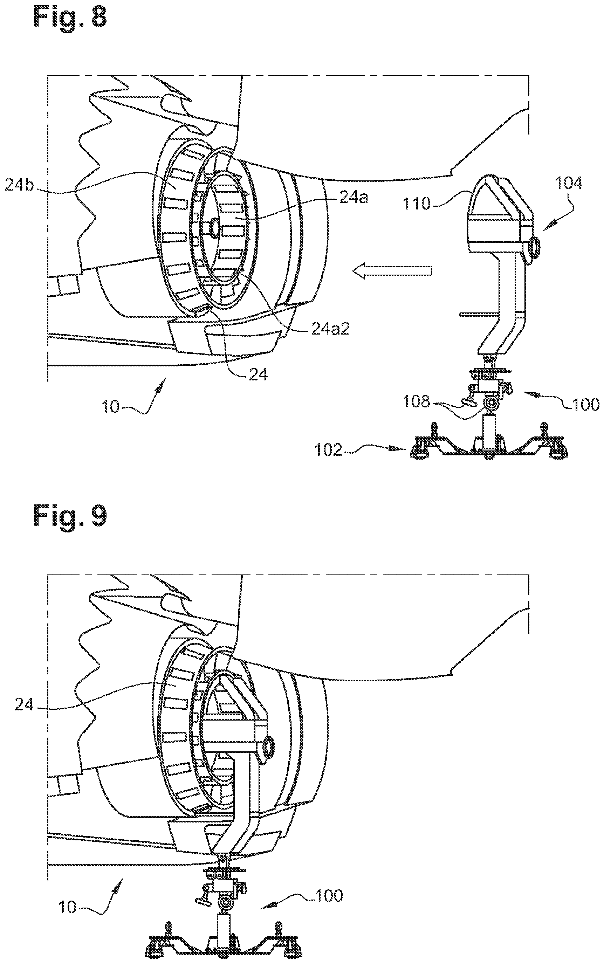

Les figures 8 à 12 représentent plus spécifiquement le démontage et le déplacement du carter de turbine 24 au moyen de l'outillage 100 qui est représenté aux figures 13 et suivantes.

Pour l'essentiel, cet outillage 100 comprend deux parties à savoir :
- un chariot inférieur 102 de déplacement de l'outillage, et
- une platine supérieure 104 de fixation au carter de turbine 24, cette platine 104 étant portée par le chariot 102.

La platine 104 est représentée seule aux figures 15 et 16. Elle comprend des premiers organes 106 configurés pour coopérer avec une des brides du carter de turbine 24 afin de l'immobiliser axialement par rapport à l'outillage, et des deuxièmes organes 108 configurés pour coopérer avec une autre bride du carter de turbine 24 afin de le bloquer en rotation autour de son axe A et d'assurer son centrage vis-à-vis de cet axe.

Dans l'exemple représenté, les organes 106 sont configurés pour coopérer avec la bride 24a2 et les organes 108 sont configurés pour coopérer avec la bride 24b1.

Les organes 106 sont ici portés par un secteur de couronne 110 de la platine 104, ce secteur de couronne 110 étant configuré pour être appliqué axialement sur la bride 24a2.

Dans l'exemple représenté, la platine 104 comprend elle-même deux parties, respectivement supérieure et inférieure, et a une forme de T ou de croix ou +. La partie inférieure de la platine 104 est sensiblement rectiligne et verticale. Cette partie inférieure est considérée comme une portion fixe par opposition à la partie supérieure qui est mobile par rapport à la portion inférieure.

La partie supérieure de la platine comprend deux branches latérales 104a1, 104a2 orientées dans des directions opposées et dont les extrémités opposées sont ici reliées entre elles par le secteur de couronne 110. Ce secteur de couronne 110 s'étend ici sur sensiblement 180° au-dessus de ces branches 104a1, 104a2.

La platine 104 comprend une extrémité inférieure 104a3 de liaison au chariot 102, et peut comprendre une extrémité supérieure 104a4 reliée également au secteur de couronne 110. L'extrémité 104a3 fait partie de la portion fixe de la platine 104, et son extrémité 104a4 fait partie de la portion mobile.

Les organes 106 sont répartis sur le secteur de couronne 110. Les organes sont au nombre de trois dans l'exemple représenté. Deux organes 106 sont situés aux extrémités circonférentielles du secteur de couronne 110, c'est-à-dire au niveau des extrémités 104a1, 104a2. Le dernier organe 106 est situé sensiblement au milieu de secteur de couronne 110, et donc au niveau de l'extrémité 104a4.

Un de ces organes 106 et représenté dans le détail à la figure 18. Chacun de ces organes 106 comprend un crochet 106a qui est relié à une molette 106b et qui est déplaçable autour d'un axe B grâce à la molette 106b depuis une première position de déverrouillage jusqu'à une seconde position de verrouillage et d'immobilisation du carter 24. En position d'utilisation, l'axe B est sensiblement parallèle à l'axe A.

Le crochet 106a a une forme générale en L et comprend une première branche 106a1 s'étendant le long de l'axe B et configurée pour être engagée radialement à l'intérieur de la bride 24a2, et une seconde branche 106a2 déplaçable depuis la première position, dans laquelle elle s'étend sensiblement tangentiellement ou radialement vers l'intérieur par rapport à l'axe A, jusqu'à la seconde position, dans laquelle elle s'étend radialement vers l'extérieur pour maintenir serrée axialement cette bride (cf. figure 18). La bride 14a2 est ainsi serrée entre le crochet et le secteur de couronne 110. Les organes 108 sont ici au nombre de deux. Un premier de ces organes est situé au voisinage de l'extrémité inférieure 104a3 du corps 104a de la platine 104 et est donc porté par la portion fixe de la platine. Un autre organe 108 est situé sur une extension latérale de l'une des branches 104a2 du corps 104a et est donc porté par la portion mobile de la platine.

Chacun de ces organes 108 comprend une tige 108a sensiblement parallèle à l'axe A et configurée pour être engagée dans un orifice de passage de vis de la bride 24a2. Du fait de la position des organes 108, les tiges 108a sont ici écartées l'une de l'autre d'un angle d'environ 90° par rapport à l'axe A.

La figure 17 est une vue à plus grande échelle de la tige 108a de l'organe 108 située au voisinage de l'extrémité 104a3. Cette tige 108a est manuellement déplaçable en translation axiale depuis une position avancée représentée à cette figure, jusqu'à une position reculée, et inversement. Pour cela et dans l'exemple représenté, la tige 108a est solidaire d'un doigt 108b qui coopère avec une encoche 11la en L d'un fourreau 111 porté par la platine 104. Le doigt 108b coopère par effet baïonnette avec cette encoche 111a, c'est-à-dire que le doigt peut être amené au deux extrémités de l'encoche. Il est possible de bloquer le doigt 108 dans sa position reculée ou bien de le maintenir dans sa position avancée, par exemple par l'intermédiaire d'un ressort 112 logé dans le fourreau 111.

La figure 19 est une vue de détail de la platine 104 et en particulier de ses portions fixe et mobile précitées. La portion mobile peut être déplacée sur la portion fixe par l'intermédiaire d'un volant 114 relié à une vis sans fin 116. Le vissage ou le dévissage du volant entraîne une translation vers l'avant ou vers l'arrière, le long de l'axe C de la vis, de la portion mobile sur la portion fixe.

Le chariot 102 de l'outillage est représenté aux figures 13 et 14. Il comprend des roues 120, ici au nombre de trois, en vue du déplacement de l'outillage sur un sol.

Le chariot 102 comprend en outre des éléments 118 de réglage d'une hauteur de la platine 104 et d'au moins un angle de pivotement de la platine autour d'un axe. Les éléments 118 permettent ainsi d'ajuster la hauteur de la platine 104 ainsi que les angles d'inclinaison de la platine, par exemple par rapport à chacun des axes d'un repère orthonormé.

Nous allons maintenant poursuivre la présentation des étapes du procédé de démontage du carter de turbine 24 en référence aux figures 8 à 12.

A la figure 8, l'outillage 100 est déplacé grâce à ces roues 120 jusqu'en aval du carter de turbine 24.

L'outillage 100 est présenté de façon à ce que le secteur de couronne 110 soit appliqué axialement contre la bride 24a2 de la virole interne 24a du carter 24 (figures 9, 10 et 10a). Pour cela, la hauteur et la position angulaire de la platine 104 vis-à-vis des angles précités peuvent être ajustées à l'aide des éléments 108 précités. Le chariot 102 peut être amené au plus près de la turbomachine 10 et l'approche du secteur de couronne 110 peut être faite grâce au volant 114 précité.

Les tiges 108a sont avancées jusqu'à ce que leurs extrémités libres s'engagent dans des orifices de la bride 24b1 de la virole externe 24b. Ceci permet de centrer la platine 104 et en particulier le secteur de couronne 110 par rapport au carter de turbine 24 (figures 10 et 13).

Les organes 106 sont ensuite manipulés pour maintenir serrée axialement la bride 24a2 contre le secteur de couronne 110. Le carter de turbine 24 est alors solidarisé à l'outillage 100 et peut être désolidarisé de la turbomachine 10. Les vis de fixation des brides 24a1, 24b1 sont dévissées et retirées. Certaines de ces vis ont dû être préalablement retirées pour l'engagement des tiges 108a dans ces orifices.

Le carter de turbine 24 peut alors être retiré axialement du reste de la turbomachine par translation axiale (figures 11 et 12). Comme illustré aux figures 11 et 11a, l'environnement du carter de turbine 24 est très contraint et son retrait peut nécessiter une succession de petits déplacements facilités par les roues 120 et les éléments de réglage 118.

Le carter de turbine 24 est alors éloigné de la turbomachine 10 et peut subir une opération de maintenance avant d'être remonté, comme illustré à la figure 2.

## Revendications

1. Outillage (100) de démontage et de déplacement d'un carter de turbine (24) du type TRV d'une turbomachine (10) d'aéronef, ce carter de turbine comportant deux viroles annulaires, respectivement interne (24a) et externe (24b), s'étendant l'une à l'intérieur de l'autre et autour d'un même axe (A) et reliées ensemble par des bras (26), l'outillage comportant:
- un chariot inférieur (102) de déplacement de l'outillage, et
- une platine supérieure (104) de fixation au carter de turbine (24), cette platine étant portée par le chariot et comportant des premiers organes (106) configurés pour coopérer avec une première bride annulaire (24a2, 24b2) d'une des viroles (24a, 24b) afin de supporter le carter et l'immobiliser axialement par rapport à l'outillage, et des deuxièmes organes (108) configurés pour coopérer avec une seconde bride annulaire (24b1) de l'autre des viroles (24b, 24a) afin de guider et/ou bloquer en rotation le carter autour dudit axe,
- **caractérisé en ce que** les premiers organes (106) comprennent des crochets (106a) qui sont chacun reliés à une molette (106b) et déplaçable grâce à la molette depuis une première position de déverrouillage jusqu'à une seconde position de verrouillage et d'immobilisation du carter (24).

2. Outillage (100) selon la revendication précédente, dans lequel les premiers organes (106) sont portés par un secteur de couronne (110) de la platine supérieure (104), ce secteur de couronne étant configuré pour être appliqué axialement sur la première bride (24a2).

3. Outillage (100) selon la revendication 1 ou 2, dans lequel chaque crochet (106a) a une forme générale en L et comprend une première branche (1 06a1) sensiblement parallèle audit axe et configurée pour être engagée radialement à l'intérieur de la première bride (24a2), et une seconde branche (106a2) déplaçable depuis la première position, dans laquelle elle s'étend sensiblement tangentiellement ou radialement vers l'intérieur par rapport audit axe, jusqu'à la seconde position, dans laquelle elle s'étend radialement vers l'extérieur pour maintenir serrée axialement cette bride.

4. Outillage (100) selon l'une des revendications précédentes, dans lequel les deuxièmes organes (108) comprennent des tiges (108a) sensiblement parallèles audit axe et configurées pour être engagées dans des orifices de passage de boulons de la seconde bride (24b1).

5. Outillage (100) selon la revendication précédente, dans lequel il comprend deux tiges (108a) écartées l'une de l'autre d'un angle prédéterminé par rapport audit axe (A).

6. Outillage (100) selon la revendication précédente, dans lequel les deux tiges (108a) sont écartées l'une de l'autre d'un angle compris entre 90° et 180°, de préférence d'environ 90°, par rapport audit axe (A).

7. Outillage (100) selon l'une des revendications précédentes, dans lequel la platine (104) comprend une partie inférieure fixe reliée au chariot (102), et une partie supérieure qui est mobile par rapport à la partie fixe et qui comprend au moins une partie desdits premiers et deuxièmes organes (106, 108).

8. Outillage (100) selon la revendication précédente, dans lequel la partie mobile est configurée pour être déplacée en translation dans une direction parallèle audit axe (A).

9. Outillage (100) selon la revendication 7 ou 8, dans lequel la partie supérieure de la platine comprend deux branches latérales (104a1, 104a2) orientées dans des directions opposées et dont les extrémités opposées sont reliées entre elles par le secteur de couronne (110).

10. Outillage (100) selon l'une des revendications précédentes, dans lequel le chariot (102) est muni de roues (120) en vue du déplacement de l'outillage sur un sol.

11. Outillage (100) selon l'une des revendications précédentes, dans lequel le chariot (102) comprend des éléments (118) de réglage d'une hauteur de la platine (104) et d'au moins un angle de pivotement de la platine autour d'un axe.

12. Procédé de démontage et de déplacement d'un carter de turbine (24) du type TRV d'une turbomachine (10) d'aéronef, en particulier lorsque la turbomachine et le carter sont situés sous une voilure (12) d'un aéronef, ce procédé utilisant un outillage (100) selon l'une des revendications précédentes et comprenant les étapes de :
- alignement de la platine (104) de l'outillage avec le carter de turbine (24), l'outillage étant situé du côté d'une extrémité aval du carter,
- déplacement de l'outillage vers le carter, jusqu'à ce que les deuxièmes organes (108) coopèrent avec la seconde bride (24b1) de la virole externe (24b), afin de bloquer et/ou de guider en rotation le carter autour de son axe (A) vis-à-vis de l'outillage,
- immobilisation axiale du carter sur la platine au moyen des premiers organes (106) de l'outillage, et
- démontage du carter et retrait du carter par déplacement de l'outillage supportant le carter.

## Patentansprüche

1. Werkzeug (100) zur Demontage und Bewegung eines Turbinengehäuses (24) des Typs TRV einer Turbomaschine (10) eines Luftfahrzeugs, wobei dieses Turbinengehäuse zwei ringförmige Halterungen, jeweils einen inneren (24a) und einen äußeren (24b), aufweist, die sich ineinander und um eine gleiche Achse (A) erstrecken und durch Arme (26) miteinander verbunden sind, wobei das Werkzeug aufweist:
- einen unteren Wagen (102) zur Bewegung des Werkzeugs und
- eine obere Platte (104) zur Befestigung am Turbinengehäuse (24), wobei diese Platte vom Wagen getragen wird und erste Organe (106) aufweist, die konfiguriert sind, um mit einem ersten ringförmigen Flansch (24a2, 24b2) einer der Halterungen (24a, 24b) zusammenzuwirken, um das Gehäuse zu tragen und es axial in Bezug auf das Werkzeug zu immobilisieren, und zweite Organe (108), die konfiguriert sind, um mit einem zweiten ringförmigen Flansch (24b1) der anderen der Halterungen (24b, 24a) zusammenzuwirken, um das Gehäuse um die Achse zu führen und/oder in der Drehung zu blockieren,
- **dadurch gekennzeichnet, dass** die ersten Organe (106) Haken (106a) umfassen, die jeweils mit einem Rädchen (106b) verbunden sind und mittels des Rädchens von einer ersten Entriegelungsposition in eine zweite Verriegelungsposition und zum Immobilisieren des Gehäuses (24) bewegbar sind.

2. Werkzeug (100) nach dem vorstehenden Anspruch, wobei die ersten Organe (106) von einem Kranzsektor (110) der oberen Platte (104) getragen werden, wobei dieser Kranzsektor konfiguriert ist, um axial auf den ersten Flansch (24a2) aufgebracht zu werden.

3. Werkzeug (100) nach Anspruch 1 oder 2, wobei jeder Haken (106a) eine allgemeine L-Form aufweist und einen ersten im Wesentlichen parallel zur Achse verlaufenden Schenkel (106a1) umfasst, der konfiguriert ist, um radial innerhalb des ersten Flansches (24a2) in Eingriff zu kommen, und einen zweiten Schenkel (106a2), der von der ersten Position, in der er sich im Wesentlichen tangential oder radial nach innen in Bezug auf die Achse erstreckt, bis zur zweiten Position, in der er sich radial nach außen erstreckt, bewegbar ist, um diesen Flansch axial festgeklemmt zu halten.

4. Werkzeug (100) nach einem der vorstehenden Ansprüche, wobei die zweiten Organe (108) Stangen (108a) umfassen, die im Wesentlichen parallel zur Achse verlaufen und konfiguriert sind, um in Bolzendurchgangsöffnungen des zweiten Flansches (24b1) in Eingriff zu kommen.

5. Werkzeug (100) nach dem vorstehenden Anspruch, wobei es zwei Stangen (108a) umfasst, die in einem vorbestimmten Winkel in Bezug auf die Achse (A) voneinander beabstandet sind.

6. Werkzeug (100) nach dem vorstehenden Anspruch, wobei die zwei Stangen (108a) in einem Winkel zwischen 90° und 180° voneinander beabstandet sind,
vorzugsweise um etwa 90°, in Bezug auf die Achse (A).

7. Werkzeug (100) nach einem der vorstehenden Ansprüche, wobei die Platte (104) einen unteren festen Teil, der mit dem Wagen (102) verbunden ist, und einen oberen Teil umfasst, der relativ zu dem festen Teil beweglich ist und der mindestens einen Teil des ersten und des zweiten Organs (106, 108) umfasst.

8. Werkzeug (100) nach dem vorstehenden Anspruch, wobei der bewegliche Teil konfiguriert ist, um translatorisch in einer Richtung parallel zu der Achse (A) bewegt zu werden.

9. Werkzeug (100) nach Anspruch 7 oder 8, wobei der obere Teil der Platte zwei seitliche Schenkel (104a1, 104a2) umfasst, die in entgegengesetzte Richtungen ausgerichtet sind und deren gegenüberliegende Enden durch den Kranzsektor (110) miteinander verbunden sind.

10. Werkzeug (100) nach einem der vorstehenden Ansprüche, wobei der Wagen (102) mit Rädern (120) zum Bewegen des Werkzeugs auf einem Boden versehen ist.

11. Werkzeug (100) nach einem der vorstehenden Ansprüche, wobei der Wagen (102) Elemente (118) zum Regeln einer Höhe der Platte (104) und mindestens eines Schwenkwinkels der Platte um eine Achse umfasst.

12. Verfahren zur Demontage und Bewegung eines Turbinengehäuses (24) des Typs TRV einer Turbomaschine (10) eines Luftfahrzeugs, insbesondere wenn die Turbomaschine und das Gehäuse unter einer Tragfläche (12) eines Luftfahrzeugs angeordnet sind, wobei dieses Verfahren ein Werkzeug (100) nach einem der vorstehenden Ansprüche verwendet und die folgenden Schritte umfasst:
- Ausrichtung der Platte (104) des Werkzeugs mit dem Turbinengehäuse (24), wobei das Werkzeug auf der Seite eines stromabwärtigen Endes des Gehäuses angeordnet ist,
- Bewegung des Werkzeugs in Richtung des Gehäuses, bis die zweiten Organe (108) mit dem zweiten Flansch (24b1) des Außenmantels (24b) zusammenwirken, um das Gehäuse um seine Achse (A) gegenüber dem Werkzeug zu blockieren und/oder in der Drehung zu führen,
- axiales Immobilisieren des Gehäuses an der Platte mittels der ersten Organe (106) des Werkzeugs, und
- Demontage des Gehäuses und Entfernen des Gehäuses durch Bewegung der das Gehäuse tragenden Werkzeuge.

## Claims

1. A tool (100) for disassembling and moving a TRV-type turbine casing (24) of an aircraft turbine engine (10), this turbine casing comprising two annular shells, internal (24a) and external (24b) respectively, which extend one inside the other and around a same axis (A) and are connected together by arms (26), the tool comprising:
- a lower carriage (102) for moving the tool, and
- an upper plate (104) for fastening to the turbine casing (24), this plate being supported by the carriage and comprising first members (106) configured to cooperate with a first annular flange (24a2, 24b2) of one of the shells (24a, 24b) in order to support the casing and axially immobilize same with respect to the tool, and second members (108) configured to cooperate with a second annular flange (24b1) of the other of the shells (24b, 24a) in order to rotatably guide and/or block the casing about said axis,
**characterised in that** the first members (106) comprise hooks (106a) which are each connected to a knob (106b) and movable by the knob from a first unlocking position to a second position for locking and immobilizing the casing (24).

2. The tool (100) according to the preceding claim, wherein the first members (106) are supported by a ring sector (110) of the upper plate (104), this ring sector being configured to be applied axially to the first flange (24a2).

3. The tool (100) of claim 1 or 2, wherein each hook (106a) is generally L-shaped and comprises a first branch (106a1) substantially parallel to said axis and configured to be engaged radially within the first flange (24a2) and a second branch (106a2) movable from the first position, in which it extends substantially tangentially or radially inwardly with respect to said axis, to the second position, in which it extends radially outwardly to hold this flange axially tight.

4. The tool (100) according to any of the preceding claims, wherein the second members (108) comprise rods (108a) substantially parallel to said axis and configured to be engaged in bolt passage orifices of the second flange (24b1).

5. The tool (100) according to the preceding claim, wherein it comprises two rods (108a) spaced apart from each other by a predetermined angle with respect to said axis (A).

6. The tool (100) according to the preceding claim, wherein the two rods (108a) are spaced apart from each other at an angle of between 90° and 180°, preferably about 90°, with respect to said axis (A).

7. The tool (100) according to any of the preceding claims, wherein the plate (104) comprises a stationary lower portion connected to the carriage (102), and an upper portion which is movable with respect to the stationary portion and which comprises at least one portion of said first and second members (106, 108).

8. The tool (100) according to the preceding claim, wherein the movable portion is configured to be translated in a direction parallel to said axis (A).

9. The tool (100) according to claim 7 or 8, wherein the upper portion of the plate comprises two side branches (104a1, 104a2) oriented in opposite directions and whose opposite ends are connected to each other by the ring sector (110).

10. The tool (100) according to any of the preceding claims, wherein the carriage (102) is provided with wheels (120) for moving the tool over a floor.

11. The tool (100) according to any of the preceding claims, wherein the carriage (102) comprises adjusting elements (118) of a height of the plate (104) and at least one pivoting angle of the plate about an axis.

12. A method for disassembling and moving a TRV-type turbine casing (24) of an aircraft turbine engine (10), in particular when the turbine engine and the casing are located under a wing (12) of an aircraft, this method using a tool (100) according to one of the preceding claims and comprising the steps of:
- aligning the plate (104) of the tool with the turbine casing (24), the tool being located on the side of a downstream end of the casing,
- moving the tool towards the casing, until the second members (108) cooperate with the second flange (24b1) of the external shell (24b), in order to rotatably guide and/or block the casing about its axis (A) in relation to the tool,
- axially immobilizing the casing on the plate by the first members (106) of the tool, and
- disassembling the casing and removing the casing by moving the tool supporting the casing.
